# EUROPÄISCHE PATENTSCHRIFT

(11) **EP 3 696 985 B1**
(45) Veröffentlichungstag und Bekanntmachung des Hinweises auf die Patenterteilung: **10.08.2022**
(21) Anmeldenummer: 19156901.1
(22) Anmeldetag: 13.02.2019
(51) Int. Cl.: H04B 1/20, H04L 12/28

(54) **AUDIOANORDNUNG MIT EINEM UNTERPUTZ-RADIO UND MINDESTENS EINEM LAUTSPRECHER SOWIE EIN ENTSPRECHENDES VERFAHREN**
AUDIO ASSEMBLY WITH FLUSH RADIO AND AT LEAST ONE LOUDSPEAKER AND A CORRESPONDING METHOD
AGENCEMENT AUDIO DOTÉ D'UNE RADIO ENCASTRÉ ET D'AU MOINS UN HAUT-PARLEUR AINSI QUE PROCÉDÉ CORRESPONDANT

(43) Veröffentlichungstag der Anmeldung: 19.08.2020
(73) Patentinhaber: GIRA GIERSIEPEN GmbH & Co. KG, 42477 Radevormwald (DE)
(72) Erfinder: Kobold, Andreas, 50670 Köln (DE); Lohmann, Achim, 58579 Schalksmühle (DE)
(74) Vertreter: Angerhausen, Christoph

(56) Entgegenhaltungen:
- EP-A2- 1 912 337
- DE-A1-102009 050 171
- DE-B3-102015 101 434

## Beschreibung

Die Erfindung betrifft eine Audioanordnung mit einem Unterputz-Radio und mindestens einem externen Lautsprecher sowie ein entsprechendes Verfahren. Eine Multifunktionseinheit innerhalb eines Hausautomatisierungs- und Hausinformationssystems ist bekannt aus DE 10 2009 050 171 A1. Ein anderes Installationsgerät ist außerdem bekannt aus DE 10 2015 101 434 B3.

Aus der DE 20 2007 010 024 U1 ist ein Mediengerät zum Empfangen und zur Wiedergabe von Rundfunk- und/oder TV-Signalen bekannt. Das Mediengerät weist mehrere Bedienelemente sowie Energieversorgungsmittel, Verstärkungsmittel und Steuermittel auf. Das Mediengerät ist nach Art eines Elektroinstallationsgeräts für die Gebäudesystemtechnik aufgebaut und weist dazu einen in eine Unterputzelektroinstallationsdose montierbaren Geräteeinsatz auf. Das Mediengerät ist somit als sogenanntes Unterputz-Gerät (UP-Gerät) ausgebildet.

Ein ähnliches Unterputz-Radio ist auch in der DE 10 2006 048 540 A1 beschrieben. Ein Geräteeinsatz für die Unterputzmontage weist ein Netzteil, einen Radiotuner, verschiedene Bedienelemente für die manuelle Betätigung, einen Verstärker und mindestens einen Lautsprecher auf. Über die Bedienelemente ist unter anderem eine gewünschte Audiowiedergabe auswählbar und über ein Steuergerät aktivierbar.

Die DE 10 2008 010 550 A1 zeigt ein weiteres Unterputz-Radio, welches ein Bedienteil mit einem Anzeigedisplay aufweist. Ein WLAN-fähiges Unterputz-Gerät ist aus der EP 2 615 719 B1 bekannt.

Die bisher gängigen FM-Radios für die Unterputzmontage werden mehr und mehr durch entsprechende Internet-Radios (IP-Radios) ersetzt werden. Diese werden wie bisher üblich mit einem oder mit mehreren Lautsprechern für die Audioausgabe gekoppelt sein. Meistens sind diese Systeme in ein IP-basiertes Gebäudeautomationssystem, beispielsweise in ein KNX-System, eingebunden, worüber das FM-Radio beziehungsweise das IP-basierte Radio die diversen Lautsprecher für die Tonausgabe, gegebenenfalls über mehrere Räume eines Gebäudes hinweg verteilt, ansteuern kann.

Darüber hinaus sind aus dem Stand der Technik IP-basierte Einzellautsprecher, Lautsprechersysteme und Multiroom-Systeme bekannt, welche den wiederzugebenen Audioinhalt aus dem Internet über Streamingdienste, lokale Speichermedien im Gebäude-LAN-Netz oder aus ähnlichen Quellen beziehen. Derartige Einzellautsprecher können per App mit Hilfe eines Smartphones oder eines anderen mobilen Geräts angesteuert werden, wozu der Einzellautsprecher und das Multiroomsystem in demselben WLAN-Netz eingebunden und/oder über eine Bluetooth-Verbindung miteinander gekoppelt sind.

Diese Art der Ansteuerung der Einzellautsprecher hat jedoch den Nachteil, dass dazu stets auf ein Smartphone, ein Tablet oder dergleichen mit der entsprechenden vorinstallierten App zurückgegriffen werden muss. Es ist daher die Aufgabe der Erfindung, eine Audioanordnung der eingangs beschriebenen Art derart weiterzuentwickeln, dass eine Ansteuerung von IP-basierten Einzellautsprechern, Lautsprechersystemen und Mulitroomsystemen auch unabhängig von mobilen Endgeräten und darauf installierten Applikationen möglich ist.

Diese Aufgabe wird durch eine Audioanordnung mit den Merkmalen des Anspruchs 1 gelöst. Der nebengeordnete Anspruch 14 betrifft ein entsprechendes Verfahren für den Betrieb einer derartigen Audioanordnung. Die abhängigen Ansprüche betreffen jeweils vorteilhafte Ausführungsformen der Erfindung.

Demgemäß ist bei einer Audioanordnung mit einem Unterputz-Radio und mindestens einem Lautsprecher vorgesehen, dass das Unterputz-Radio über eine erste Datenschnittstelle für die Übertragung von Audiodaten mit einer ersten Audiodatenquelle und über eine zweite Datenschnittstelle für die Übertragung von Steuerbefehlen mit dem Lautsprecher verbunden ist. Der mindestens eine Lautsprecher ist über eine dritte Datenschnittstelle für die Übertragungvon Audiodaten mit einer zweiten Audiodatenquelle verbunden.

Die erfindungsgemäße Audioanordnung ermöglicht es somit, dass der Lautsprecher, welcher beispielsweise ein freistehender IP-basierter Einzellautsprecher sein kann, der beispielsweise über eine Funkschnittstelle, etwa WLAN-Schnittstelle in ein WLAN-Netz eingebunden ist, über die Bedienelemente, welche gängige Unterputz-Radios bauseits aufweisen, angesteuert werden kann. Dazu kann das Unterputz-Radio dann ebenfalls über die Funkschnittstelle in das WLAN-Netz eingebunden sein, so dass die zweite Datenschnittstelle als WLAN-Verbindung ausgebildet ist und die Übertragung von Steuerbefehlen von dem Unterputz-Radio an den Lautsprecher, welcher sich beispielsweise auch in einem ganz anderen Gebäudeteil als das Unterputz-Radio befinden kann, möglich ist.

Die erste Datenschnittstelle, mit welcher das Unterputz-Radio für die Übertragung von Audiodaten mit einer ersten Audiodatenquelle verbunden ist, kann beispielsweise IP-basiert sein, beispielsweise eine drahtgebundene Verbindung oder eine Funkverbindung in einem Gebäudeautomatisierungssystem, beispielsweise ein KNX-System, welches einen Datenserver aufweist, auf dem die Audiodaten hinterlegt sind. Die erste Datenschnittstelle kann jedoch auch eine Antenne zum Empfang von Rundfunksignalen und die erste Audiodatenquelle ein Rundfunksignal sein.

Die zweite Datenschnittstelle kann insbesondere als Funkschnittstelle ausgebildet sein, beispielsweise als eine WLAN-Schnittstelle oder eine Bluetooth-Schnittstelle. Es ist aber auch denkbar, dass der Lautsprecher in ein Gebäudenetzwerk, beispielsweise ein KNX-System eingebunden ist, welches als Funk-System aber auch drahtgebunden ausgebildet sein kann. Wenn das Unterputz-Radio ebenfalls in das Gebäudeautomatisierungssystem eingebunden ist, kann die zweite Datenschnittstelle für die Übertragung der Steuerbefehle zwischen dem Unterputz-Radio und dem Lautsprecher IP-basiert über das Gebäudenetzwerk realisiert sein. Insbesondere in diesem Fall kann die zweite Datenschnittstelle auch teilweise drahtgebunden und teilweise funkbasiert ausgebildet sein.

Es kann vorgesehen sein, dass die erste und die zweite Audiodatenquelle unterschiedliche Audiodatenquellen sind. Die erste und die zweite Audiodatenquelle können jedoch auch dieselbe Audiodatenquelle sein. Dies ermöglicht es, dass sowohl das Unterputz-Radio als auch der Lautsprecher grundsätzlich autark in der aus dem Stand der Technik bekannten Weise weiterverwendet werden können, so dass die zuvor beschriebene besonders vorteilhafte Übertragung von Steuerbefehlen von dem Unterputz-Radio an den Lautsprecher eine optionale Verwendungsvariante der Audioanordnung darstellt.

Die erste und/oder die zweite Audiodatenquelle können ein Rundfunksignal, ein IP-Netzwerk oder ein IP-Server, beispielsweise ein Server eines Systems für die Gebäudeautomatisierung sein.

Das Unterputz-Radio kann dazu eingerichtet sein, in Folge einer manuellen Eingabe ein einen Steuerbefehl aufweisendes Steuersignal zu erzeugen und über die zweite Datenschnittstelle an den mindestens einen Lautsprecher zu übertragen. Das Unterputz-Radio kann dazu einen Betriebsmodus aufweisen, in welchem es für die Datenübertragung über die zweite Datenschnittstelle mit dem Lautsprecher gekoppelt wird. Dies kann beispielsweise derart erfolgen, dass das Unterputz-Radio eine WLAN-Verbindung zu dem Gebäude-WLAN-Funknetz aufbaut, mit welchem der Lautsprecher standardmäßig für den Bezug von Audiodaten gekoppelt ist. In einem zweiten Betriebsmodus kann die zweite Datenschnittstelle zu dem Lautsprecher unterbrochen werden, beispielsweise indem die WLAN-Verbindung des Unterputz-Radios zu einem WLAN-Router des Gebäudenetzwerks unterbrochen wird, wobei in diesem Betriebsmodus das Unterputz-Radio dazu eingerichtet sein kann, einen weiteren Lautsprecher, welcher Bestandteil des Unterputz-Radios ist, beispielsweise einen Unterputz-Lautsprecher, für die Audioausgabe anzusteuern.

Das Unterputz-Radio kann mindestens eine Eingabevorrichtung für die Betätigung des Unterputz-Radios und mindestens eine Steuereinheit für die Ausgabe eines Steuerbefehls an den Lautsprecher über die zweite Datenschnittstelle aufweisen.

Die Steuereinheit kann dazu eingerichtet sein, den Steuerbefehl aus einer über die Eingabevorrichtung eingegebenen Eingabe zu erzeugen und als ein Steuersignal über die zweite Datenschnittstelle an den Lautsprecher zu senden.

Der Steuerbefehl kann eine Rundfunksender- und/oder eine Audiodatenauswahl aufweisen. Dabei kann der Lautsprecher dazu eingerichtet sein, über die dritte Datenschnittstelle von der zweiten Audiodatenquelle einen der Rundfunksenderauswahl entsprechenden Rundfunksenderstream oder der Audiodatenauswahl entsprechende Audiodaten zu beziehen.

Das Unterputz-Radio und der Lautsprecher können als separate Einheiten räumlich voneinander getrennt angeordnet sein. Dabei ist vorzugsweise vorgesehen, dass die beiden räumlich getrennten Einheiten ausschließlich über die zweite Datenschnittstelle miteinander in Verbindung stehen. Dabei ist die zweite Datenschnittstelle vorzugsweise eine IP-basierte Funkschnittstelle, beispielsweise eine Funkverbindung zwischen dem Unterputz-Radio und dem Lautsprecher, die mithilfe eines WLAN-Routers, mit dem sowohl das Unterputz-Radio als auch der Lautsprecher über eine jeweilige WLAN-Schnittstelle verbunden sind, realisiert ist. Die zweite Audiodatenquelle kann ein IP-Netzwerk, beispielsweise ein internetbasierter Streamingdienst für Audioinhalte sein.

Die zweite Datenschnittstelle kann einen Router, beispielsweise einen WLAN-Router, aufweisen, mit dem der Lautsprecher und das Unterputz-Radio für die Übertragung von Steuerbefehlen verbunden sind.

Eine Eingabevorrichtung für die Betätigung des Unterputz-Radios kann ein mobiles Endgerät, beispielsweise ein Smartphone, aufweisen, das über eine Funkschnittstelle, beispielsweise eine Bluetooth-Schnittstelle, mit einem Unterputz-Einsatz des Unterputz-Radios verbunden ist. Der Unterputz-Einsatz kann beispielsweise eine Bedieneinheit des Unterputz-Radios sein. Die Bedieneinheit kann beispielsweise ein Display aufweisen, auf dem mithilfe geeigneter grafischer Darstellungen über das mobile Endgerät eingegebene Steuerbefehle bestätigt werden.

Der Unterputz-Einsatz kann ein weiterer Lautsprecher der Audioanordnung sein, der die Funkschnittstelle aufweist, dabei kann der weitere Lautsprecher frei von manuellen Eingabevorrichtungen für die Interaktion mit dem Unterputz-Radio sein, insbesondere frei von Tasten und/oder Tastfeldern. Weiterhin kann der weitere Lautsprecher frei von Displays und anderweitigen Anzeigen sein. Insbesondere ist es möglich, dass der weitere Lautsprecher auf seine Funktion, eine akustische Ausgabe bereitzustellen, sowie auf seine Funkschnittstelle zu dem mobilen Endgerät beschränkt sein. Jegliche Bedienelemente am Unterputz-Einsatz sind nicht erforderlich.

Gemäß einem anderen Aspekt betrifft die Erfindung ein Verfahren für den Betrieb einer Audioanordnung der zuvor beschriebenen Art. Das Verfahren weist die Schritte auf:
a. Betätigen einer Eingabevorrichtung des Unterputz-Radios, wodurch eine Eingabe zur Ansteuerung des mindestens einen Lautsprechers bereitgestellt wird;
b. Erzeugen eines Steuerbefehls für die Ansteuerung des Lautsprechers aus der Eingabe; und
c. Übertragen des Steuerbefehls als Steuereinheit über die zweite Datenschnittstelle an den Lautsprecher.

Der Steuerbefehl kann eine Rundfunksender- und/oder eine Audiodatenauswahl aufweisen, wobei nach dem Übertragen des Steuerbefehls an den Lautsprecher der Lautsprecher über die dritte Datenschnittstelle von der zweiten Audiodatenquelle einen der Rundfunksenderauswahl entsprechenden Rundfunksenderstream oder der Audiodatenauswahl entsprechende Audiodaten bezieht.

Das Unterputz-Radio kann nach dem Bereitstellen der Eingabe ein einen Steuerbefehl aufweisendes Steuersignal erzeugen und über die zweite Datenschnittstelle an den Lautsprecher übertragen.

Das Übertragen des Steuerbefehls über die zweite Datenschnittstelle kann das Übertragen des Steuerbefehls über einen Router, beispielsweise einen WLAN-Router, mit dem der Lautsprecher und das Unterputz-Radio für die Übertragung von Steuerbefehlen verbunden sind, aufweisen.

Weitere Einzelheiten der Erfindung werden anhand der nachstehenden Figuren erläutert. Dabei zeigt:
- Figur 1: eine erste beispielhafte Ausführungsform einer erfindungsgemäßen Audioanordnung in schematischer Darstellung; und
- Figur 2: eine zweite Ausführungsform einer erfindungsgemäßen Audioanordnung in schematischer Darstellung.

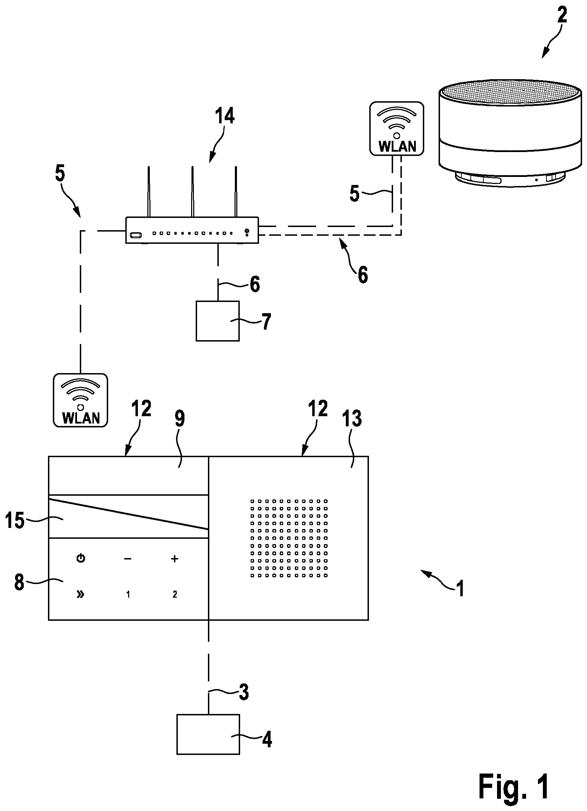

Bei der in Figur 1 gezeigten Audioanordnung ist das Unterputz-Radio 1 aus zwei Unterputzteilgeräten aufgebaut. Das Unterputz-Radio 1 weist einerseits ein Bedienteil auf, mit einer Eingabevorrichtung 8, die verschiedene Tastsensoren aufweist, und mit einem Display 15. Als zweites Unterputzteilgerät weist das Unterputz-Radio 1 andererseits einen Lautsprecher 13 auf, der über das Bedienteil angesteuert ist. Mit Hilfe der Eingabevorrichtung 8 und dem Display 15 kann beispielsweise eine Senderauswahl getroffen werden, eine Lautstärkeregulierung erfolgen, eine Timer-Programmierung erfolgen und dergleichen. Das Unterputz-Radio 1 weist einen die Bedieneinheit und den Lautsprecher 13 umschließenden Rahmen auf und ist hinsichtlich seiner Abmessungen an ein gängiges Schalterprogramm zur Montage in zwei aneinandergrenzenden, normierten UP-Einbaudosen angepasst.

Über eine erste Datenschnittstelle 3 ist das Unterputz-Radio 1 an eine erste Audiodatenquelle 4 angebunden. Die erste Datenschnittstelle 3 kann beispielsweise die Ankopplung des Unterputz-Radios 1 in ein IP-basiertes Gebäudeautomatisierungssystem, beispielsweise in ein KNX-System darstellen, wobei die Audiodatenquelle 4 beispielsweise ein zentraler Homeserver des KNX-Systems ist, auf dem Audiodaten für den Zugriff über das Unterputz-Radio 1 abgelegt sind. Insoweit ist das in Figur 1 gezeigte Unterputz-Radio 1 aus dem Stand der Technik bekannt.

Abweichend von den bekannten Anordnungen aus dem Stand der Technik weist das Unterputz-Radio 1 nunmehr jedoch eine zweite Datenschnittstelle 5 für die Übertragung von Steuerbefehle an einen externen Lautsprecher 2 auf. Die zweite Datenschnittstelle 5 ist vorliegend als eine Funkschnittstelle ausgebildet, insbesondere eine WLAN-Funkschnittstelle. Insbesondere ist das Unterputz-Radio 1 über seine WLAN-Schnittstelle mit einem WLAN-Router verbunden. Ebenso ist der externe Lautsprecher 2 über seine WLAN-Schnittstelle mit dem Router 14 verbunden, so dass über den Router 14 eine Funkverbindung zwischen dem Unterputz-Radio 1 und dem Lautsprecher 2 zur Realisierung der zweiten Datenschnittstelle für die Übertragung von Steuerbefehlen realisiert werden kann.

Der Lautsprecher 2 weist eine dritte Datenschnittstelle 6 für die Übertragung von Audiodaten von einer zweiten Audiodatenquelle 7 auf. Diese ist ebenfalls als eine WLAN-Schnittstelle 6 zu dem Router 14 ausgebildet, wobei der Router 14 wiederum mit der zweiten Audiodatenquelle 7 verbunden ist. Die Verbindung zwischen dem Router 14 und der zweiten Audiodatenquelle 7 kann grundsätzlich sowohl drahtgebunden als auch als Funkverbindung ausgebildet sein.

Der Lautsprecher 2 kann beispielsweise ein aus dem Stand Technik bekannter Einzellautsprecher sein, welcher einerseits über die dargestellte dritte Datenschnittstelle 6 mit einer zweiten Audiodatenquelle 7 verbunden ist und im Übrigen eine weitere Funkschnittstelle für die Kopplung mit einem mobilen Endgerät, beispielsweise einem Smartphone aufweist. Die Verbindung zu dem mobilen Endgerät kann beispielsweise ebenfalls als WLAN-Verbindung ausgebildet sein. Es sind jedoch auch andere aus dem Stand der Technik bekannte Übertragungstechnologien zwischen dem mobilen Endgerät und dem Lautsprecher 2 denkbar, beispielsweise eine Bluetooth-Verbindung oder eine NFC-Verbindung.

Der Lautsprecher 2 und das Unterputz-Radio 1 sind somit auch bei der gezeigten Audioanordnung grundsätzlich als eigenständige Funktionseinheiten weiterhin verwendbar. Das Unterputz-Radio 1 kann auf herkömmliche Art über die erste Datenschnittstelle 3 aus der ersten Audiodatenquelle 4 Audiodaten beziehen, wobei eine entsprechende Audiodatenauswahl von einem Benutzer über die Eingabevorrichtung 8 und das Display 15 erfolgen werden kann. Die akustische Ausgabe ist über den weiteren Lautsprecher 13 des Unterputz-Radios 1 bereitgestellt.

Ebenso kann der Lautsprecher 2 auch unabhängig von einer Ansteuerung durch das Unterputz-Radio 1 beispielsweise durch Ansteuerung durch ein mobiles Endgerät wie ein Smartphone oder ein Tablet über seine dritte Datenschnittstelle 6 über das WLAN-Netzwerk Audiodaten aus der zweiten Audiodatenquelle 7 beziehen. Um die Ansteuerung des Lautsprechers 2 durch ein mobiles Endgerät entbehrlich zu machen, oder falls ein solches mobiles Endgerät gerade nicht verfügbar ist, kann erfindungsgemäß ein von einem Anwender mithilfe der Eingabevorrichtung 8 erzeugter Steuerbefehl über die zweite Datenschnittstelle 5 an den Lautsprecher 2 ausgegeben werden. Der Steuerbefehl kann über die Eingabevorrichtung 8 und gegebenenfalls unter Zuhilfenahme des Displays 15 von einem Nutzer durch manuelle Interaktion mit dem Unterputz-Radio 1 erzeugt werden, woraufhin der Lautsprecher 2 nach dem Empfangen des Steuerbefehls dem Steuerbefehl entsprechend über seine dritte Datenschnittstelle 6 beispielsweise seine Lautstärke reguliert oder einer dem Steuerbefehl entsprechenden Audioauswahl über seine dritte Datenschnittstelle 6 Audiodaten aus der zweiten Audiodatenquelle 7 bezieht.

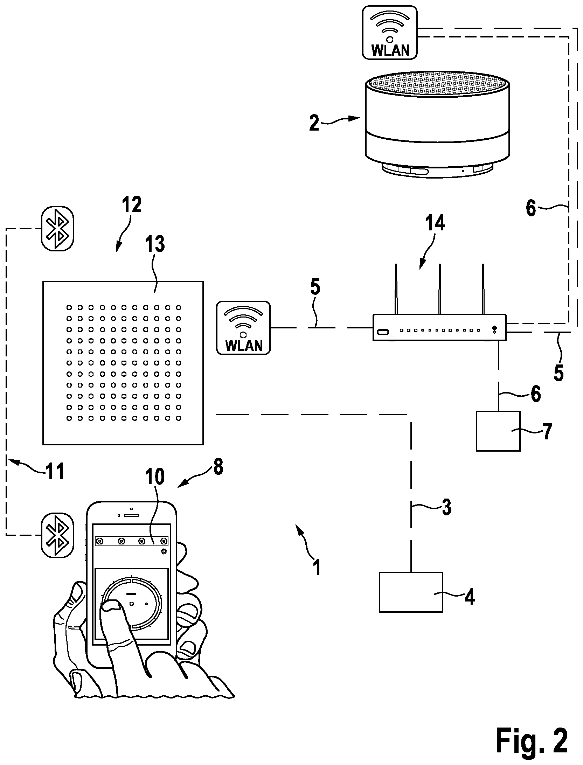

Wenn beispielsweise die Ansteuerung des externen Lautsprechers 2 über ein Benutzerinterface eines Gebäudeautomatisierungssystems gewünscht ist, wobei die Schnittstelle beispielsweise in Form einer Applikation auf einem mobilen Endgerät, beispielsweise auf einem Smartphone, realisiert ist, so ist bei der in Figur 2 dargestellten Ausführungsform vorgesehen, dass das mobile Endgerät, welches das Benutzerinterface bereitstellt, über eine Funkschnittstelle, beispielsweise eine Bluetooth-Schnittstelle mit einem Unterputz-Einsatz 12 des Unterputzradios 1 verbunden ist. Der Unterputz-Einsatz 12 ist dabei als ein weiterer Lautsprecher 13 ausgebildet, der die Funkschnittstelle aufweist und im Übrigen frei von manuellen Eingabevorrichtungen für die Interaktion mit dem Unterputz-Radio 1 ist. Der weitere Lautsprecher 13 bildet somit gemeinsam mit dem mobilen Endgerät das Unterputz-Radio 1, wobei der Unterputzeinsatz 12 des Unterputz-Radios 1 auf den Lautsprecher 13 mit der Funkschnittstelle beschränkt ist. Sämtliche Betätigungselemente, die bei der in Figur 1 gezeigten Ausführungsform mit Hilfe der Eingabevorrichtung 8 und mit Hilfe des Displays 15 realisiert sind, sind auf das mobile Endgerät ausgelagert. Auf diesem kann eine Applikation vorinstalliert sein, welche über die Funkschnittstelle 11 einerseits die Ansteuerung des weiteren Lautsprechers 13 und andererseits ermöglicht, dass über die Funkschnittstelle 11 Steuerbefehle an den weiteren Lautsprecher 13 von dem mobilen Endgerät 10 übertragen werden, die über die zweite Datenschnittstelle 5 zwischen dem weiteren Lautsprecher 13 und dem gegebenenfalls an einem ganz anderen Ort des Gebäudes angeordneten Lautsprecher 2 übertragen werden. Die zweite Datenschnittstelle 5 ist wiederum als eine WLAN-Schnittstelle zwischen dem weiteren Lautsprecher 13 und dem Lautsprecher 2 ausgebildet, wozu der weitere Lautsprecher 13 und der Lautsprecher 2 mit einem gemeinsamen WLAN-Router 14 gekoppelt sind. Analog zu der in Figur 1 gezeigten Ausführungsform ist der Lautsprecher 2 wiederum über eine dritte Datenschnittstelle 6, die ebenfalls eine WLAN-Schnittstelle zu dem Router 14 ist, mit einer zweiten Audiodatenquelle 7 verbunden, die mit dem Router 14 gekoppelt ist.

Analog zu der in Figur 1 dargestellten Ausführungsform kann das Unterputz-Radio 1 gemäß Figur 2 über die erste Datenschnittstelle 3 Audiodaten aus einer ersten Audiodatenquelle 4 beziehen, so dass wiederum das Unterputz-Radio 1 und der Lautsprecher 2 grundsätzlich voneinander unabhängig betrieben werden können, so dass eine Interaktion zu dem Unterputz-Radio 1 und dem Lautsprecher 2 über die zweite Datenschnittstelle 5 nur im Bedarfsfall erfolgen kann.

### Bezugszeichenliste

- 1: Unterputz-Radio
- 2: Lautsprecher
- 3: erste Datenschnittstelle
- 4: erste Audiodatenquelle
- 5: zweite Datenschnittstelle
- 6: dritte Datenschnittstelle
- 7: zweite Audiodatenquelle
- 8: Eingabevorrichtung
- 9: Steuereinheit
- 10: mobiles Endgerät
- 11: Funkschnittstelle
- 12: Unterputz-Einsatz
- 13: weiterer Lautsprecher
- 14: Router
- 15: Display

## Patentansprüche

1. Audioanordnung mit einem Unterputz-Radio (1) und mindestens einem externen Lautsprecher (2), wobei das Unterputz-Radio (1) über eine erste Datenschnittstelle (3) für die Übertragung von Audiodaten mit einer ersten Audiodatenquelle (4) und über eine zweite Datenschnittstelle (5) für die Übertragung von Steuerbefehlen mit dem mindestens einen externen Lautsprecher (2) verbunden ist, und wobei der mindestens eine externe Lautsprecher (2) über eine dritte Datenschnittstelle (6) für die Übertragung von Audiodaten mit einer zweiten Audiodatenquelle (7) verbunden ist.

2. Audioanordnung nach Anspruch 1, bei der die zweite Datenschnittstelle (5) eine Funkschnittstelle, beispielsweise eine WLAN-Schnittstelle oder eine Bluetooth-Schnittstelle ist.

3. Audioanordnung nach Anspruch 1 oder 2, bei der die erste und die zweite Audiodatenquelle (4, 7) unterschiedliche Audiodatenquellen (4, 7) oder dieselben Audiodatenquellen (4, 7) sind.

4. Audioanordnung nach einem der vorangegangenen Ansprüche, bei der die erste und/oder die zweite Audiodatenquelle (4, 7) ein Rundfunksignal, ein IP-Netzwerk, oder ein IP-Server, beispielsweise ein Server eines Systems für die Gebäudeautomatisierung ist.

5. Audioanordnung nach einem der vorangegangenen Ansprüche, bei der das Unterputz-Radio (1) dazu eingerichtet ist, infolge einer manuellen Eingabe ein einen Steuerbefehl aufweisendes Steuersignal zu erzeugen und über die zweite Datenschnittstelle (5) an den externen Lautsprecher (2) zu übertragen.

6. Audioanordnung nach einem der vorangegangenen Ansprüche, bei der das Unterputz-Radio (1) mindestens eine Eingabevorrichtung (8) für die Betätigung des Unterputz-Radios (1) und mindestens eine Steuereinheit (9) für die Ausgabe eines Steuerbefehls an den externen Lautsprecher (2) über die zweite Datenschnittstelle (5) aufweist.

7. Audioanordnung nach Anspruch 6, bei der die Steuereinheit (9) dazu eingerichtet ist, den Steuerbefehl aus einer über die Eingabevorrichtung (8) eingegebenen Eingabe zu erzeugen und als ein Steuersignal über die zweite Datenschnittstelle (5) an den externen Lautsprecher (2) zu senden.

8. Audioanordnung nach einem der Ansprüche 5 bis 7, bei der der Steuerbefehl eine Rundfunksender- und/oder eine Audiodatenauswahl aufweist, wobei der externer Lautsprecher (2) dazu eingerichtet ist, über die dritte Datenschnittstelle (6) von der zweiten Audiodatenquelle (7) einen der Rundfunksenderauswahl entsprechenden Rundfunksenderstream oder der Audiodatenauswahl entsprechende Audiodaten zu beziehen.

9. Audioanordnung nach einem der vorangegangenen Ansprüche, bei der das Unterputz-Radio (1) und der externe Lautsprecher (2) als separate Einheiten räumlich getrennt voneinander angeordnet sind, die nur über die zweite Datenschnittstelle (5) miteinander in Verbindung stehen.

10. Audioanordnung nach einem der vorangegangenen Ansprüche, bei der die zweite Audiodatenquelle (7) ein IP-Netzwerk, beispielsweise ein internetbasierter Streamingdienst für Audioinhalte ist.

11. Audioanordnung nach einem der vorangegangenen Ansprüche, bei der die zweite Datenschnittstelle (5) einen Router (14), beispielsweise einen WLAN-Router, mit dem der externe Lautsprecher (2) und das Unterputz-Radio (1) für die Übertragung von Steuerbefehlen verbunden sind, aufweist.

12. Audioanordnung nach einem der vorangegangenen Ansprüche, bei der eine Eingabevorrichtung (8) für die Betätigung des Unterputz-Radios (1) ein mobiles Endgerät (10), beispielsweise ein Smartphone, aufweist, das über eine Funkschnittstelle (11), beispielsweise eine Bluetooth-Schnittstelle, mit einem Unterputz-Einsatz (12) des Unterputz-Radios (1) verbunden ist.

13. Audioanordnung nach Anspruch 12, bei der der Unterputz-Einsatz (12) ein weiterer Lautsprecher (13) der Audioanordnung ist, der die Funkschnittstelle (11) aufweist, wobei der weitere Lautsprecher (13) frei von manuellen Eingabevorrichtungen für die Interaktion mit dem Unterputz-Radio (1) ist, insbesondere frei von Tasten und/oder Tastfeldern.

14. Verfahren für den Betrieb einer Audioanordnung nach einem der vorangegangenen Ansprüche, das die Schritte aufweist:
a. Betätigen einer Eingabevorrichtung (8) des Unterputz-Radios (1), wodurch eine Eingabe zur Ansteuerung des externen Lautsprechers (2) bereitgestellt wird;
b. Erzeugen eines Steuerbefehls für die Ansteuerung des externen Lautsprechers (2) aus der Eingabe; und
c. Übertragen des Steuerbefehls als Steuersignal über die zweite Datenschnittstelle (5) an den externen Lautsprecher (2).

15. Verfahren nach Anspruch 14, bei dem der Steuerbefehl eine Rundfunksender- und/oder eine Audiodatenauswahl aufweist, wobei nach dem Übertragen des Steuerbefehls an den externen Lautsprecher (2), der externe Lautsprecher (2) über die dritte Datenschnittstelle (6) von der zweiten Audiodatenquelle (7) einen der Rundfunksenderauswahl entsprechenden Rundfunksenderstream oder der Audiodatenauswahl entsprechende Audiodaten bezieht.

16. Verfahren nach Anspruch 14 oder 15, bei dem das Unterputz-Radio (1) nach dem Bereitstellen der Eingabe ein einen Steuerbefehl aufweisendes Steuersignal erzeugt und über die zweite Datenschnittstelle (5) an den externen Lautsprecher (2) überträgt.

17. Verfahren nach einem der Ansprüche 14 bis 16, bei dem das Übertragen des Steuerbefehls über die zweite Datenschnittstelle (5) das Übertragen des Steuerbefehls über einen Router (14), beispielsweise einen WLAN-Router, mit dem der externe Lautsprecher (2) und das Unterputz-Radio (1) für die Übertragung von Steuerbefehlen verbunden sind, aufweist.

## Claims

1. An audio arrangement having a flush-mounted radio (1) and at least one external loudspeaker (2), the flush-mounted radio (1) being connected to a first audio data source (4) via a first data interface (3) for the transmission of audio data and to the at least one external loudspeaker (2) via a second data interface (5) for the transmission of control commands, and the at least one external loudspeaker (2) being connected to a second audio data source (7) via a third data interface (6) for the transmission of audio data.

2. The audio arrangement according to claim 1, wherein the second data interface (5) is a radio interface, for example a WLAN interface or a Bluetooth interface.

3. The audio arrangement of claim 1 or 2, wherein the first and second audio data sources (4, 7) are different audio data sources (4, 7) or the same audio data sources (4, 7).

4. The audio arrangement according to any one of the preceding claims, wherein the first and/or the second audio data source (4, 7) is a broadcast signal, an IP network, or an IP server, for example a server of a building automation system.

5. The audio arrangement according to any one of the preceding claims, wherein the flush-mounted radio (1) is arranged to generate a control signal comprising a control command as a result of a manual input and to transmit said control signal to the external loudspeaker (2) via the second data interface (5).

6. The audio arrangement according to any one of the preceding claims, wherein the flush-mounted radio (1) comprises at least one input device (8) for operating the flush-mounted radio (1) and at least one control unit (9) for outputting a control command to the external loudspeaker (2) via the second data interface (5).

7. The audio arrangement according to claim 6, wherein the control unit (9) is adapted to generate the control command from an input entered via the input device (8) and to send it as a control signal to the external loudspeaker (2) via the second data interface (5).

8. The audio arrangement according to any one of claims 5 to 7, wherein the control command comprises a broadcast station selection and/or an audio data selection, the external loudspeaker (2) being arranged to obtain a broadcast station stream corresponding to the broadcast station selection or audio data corresponding to the audio data selection from the second audio data source (7) via the third data interface (6).

9. The audio arrangement according to any one of the preceding claims, in which the flush-mounted radio (1) and the external loudspeaker (2) are arranged as separate units spatially separated from one another, which are connected to one another only via the second data interface (5).

10. The audio arrangement according to any one of the preceding claims, wherein the second audio data source (7) is an IP network, for example an Internet-based streaming service for audio content.

11. The audio arrangement according to any one of the preceding claims, wherein the second data interface (5) comprises a router (14), for example a WLAN router, to which the external loudspeaker (2) and the flush-mounted radio (1) are connected for the transmission of control commands.

12. The audio arrangement according to any one of the preceding claims, in which an input device (8) for operating the flush-mounted radio (1) has a mobile terminal (10), for example a smartphone, which is connected to a flush-mounted insert (12) of the flush-mounted radio (1) via a radio interface (11), for example a Bluetooth interface.

13. The audio arrangement according to claim 12, wherein the flush-mounted insert (12) is a further loudspeaker (13) of the audio arrangement comprising the radio interface (11), the further loudspeaker (13) being free of manual input devices for interaction with the flush-mounted radio (1), in particular free of keys and/or touch fields.

14. A method of operating an audio device according to any one of the preceding claims, comprising the steps of:
a. Actuating an input device (8) of the flush-mounted radio (1), thereby providing an input to control the external loudspeaker (2);
b. Generating a control command for controlling the external loudspeaker (2) from the input; and
c. Transmitting the control command as a control signal via the second data interface (5) to the external loudspeaker (2).

15. The method of claim 14, wherein the control command comprises a broadcast station selection and/or an audio data selection, wherein after transmitting the control command to the external loudspeaker (2), the external loudspeaker (2) obtains a broadcast station stream corresponding to the broadcast station selection or audio data corresponding to the audio data selection from the second audio data source (7) via the third data interface (6).

16. The method according to claim 14 or 15, in which the flush-mounted radio (1), after providing the input, generates a control signal comprising a control command and transmits it to the external loudspeaker (2) via the second data interface (5).

17. The method of any one of claims 14 to 16, wherein transmitting the control command via the second data interface (5) comprises transmitting the control command via a router (14), for example a WLAN router, to which the external loudspeaker (2) and the flush-mounted radio (1) are connected for transmitting control commands.

## Revendications

1. Dispositif audio avec une radio encastrée (1) et au moins un haut-parleur externe (2), dans lequel la radio encastrée (1) est reliée, par l'intermédiaire d'une première interface de données (3) pour la transmission de données audio, avec une source de données audio (4) et par l'intermédiaire d'une deuxième interface de données (5) pour la transmission d'instructions avec l'au moins un haut-parleur externe (2), et dans lequel l'au moins un haut-parleur externe (2) est relié, par l'intermédiaire d'une troisième interface de données (6) pour la transmission de données audio avec une deuxième source de données audio (7).

2. Dispositif audio selon la revendication 1, dans lequel la deuxième interface de données (5) est une interface radio, par exemple une interface WLAN ou une interface Bluetooth.

3. Dispositif audio selon la revendication 1 ou 2, dans lequel les première et deuxième sources de données audio (4, 7) sont des sources de données audio (4, 7) différente ou sont les mêmes sources de données audio (4, 7).

4. Dispositif audio selon l'une des revendications précédentes, dans lequel la première et/ou la deuxième source de données audio (4, 7) est un signal de radiodiffusion, un réseau IP ou un serveur IP, par exemple un serveur d'un système de domotique.

5. Dispositif audio selon l'une des revendications précédentes, dans lequel la radio encastrée (1) est conçue pour générer, à la suite d'une entrée manuelle, un signal de commande comprenant une instruction et pour le transmettre par l'intermédiaire de la deuxième interface de données (5) au haut-parleur externe (2).

6. Dispositif audio selon l'une des revendications précédentes, dans lequel la radio encastrée (1) comprend au moins un dispositif d'entrée (8) pour l'actionnement de la radio encastrée (1) et au moins une unité de commande (9) pour l'envoi d'une instruction au haut-parleur externe (2) par l'intermédiaire de la deuxième interface de données (5).

7. Dispositif audio selon la revendication 6, dans lequel l'unité de commande (9) est conçu pour générer l'instruction à partir d'une entrée saisie par l'intermédiaire du dispositif d'entrée (8) et pour l'envoyer sous la forme d'un signal de commande par l'intermédiaire de la deuxième interface de données (5) au haut-parleur externe (2).

8. Dispositif audio selon l'une des revendications 5 à 7, dans lequel l'instruction comprend une sélection d'émetteurs radio et/ou de données radio, dans lequel le haut-parleur externe (2) est conçu pour extraire, par l'intermédiaire de la troisième interface de données (6) de la deuxième source de données audio (7), un flux d'émetteur radio correspondant à la sélection de données radio ou des données audio correspondant à la sélection de données audio.

9. Dispositif audio selon l'une des revendications précédentes, dans lequel la radio encastrée (1) et le haut-parleur externe (2) sont disposés de manière séparée physiquement entre elles en tant qu'unités séparées, qui ne sont reliées entre elles que par l'intermédiaire de la deuxième interface de données (5).

10. Dispositif audio selon l'une des revendications précédentes, dans lequel la deuxième source de données audio (7) est un réseau IP, par exemple un service de streaming sur Internet pour des contenus audio.

11. Dispositif audio selon l'une des revendications précédentes, dans lequel la deuxième interface de données (5) comprend un routeur (14), par exemple un routeur WLAN avec lequel le haut-parleur externe (2) et la radio encastrée (1) sont reliés pour la transmission d'instructions.

12. Dispositif audio selon l'une des revendications précédentes, dans lequel un dispositif d'entrée (8) pour l'actionnement de la radio encastrée (1) comprend un terminal mobile (10), par exemple un smartphone, qui est relié par l'intermédiaire d'une interface radio (11), par exemple une interface Bluetooth, avec un insert encastré (12) de la radio encastrée (1).

13. Dispositif audio selon la revendication 12, dans lequel l'insert encastré (12) comprend un autre haut-parleur (13) du dispositif audio qui comprend l'interface radio (11), dans lequel l'autre haut-parleur (13) est exempt de dispositifs d'entrée manuels pour l'interaction avec la radio encastrée (1), plus particulièrement exempt de touches et/ou de pavés tactiles.

14. Procédé de fonctionnement du dispositif audio selon l'une des revendications précédentes, qui comprend les étapes suivantes :
a. actionnement d'un dispositif d'entrée (8) de la radio encastrée (1), ce qui génère une entrée pour le contrôle du haut-parleur externe (2) ;
b. production d'une instruction pour le contrôle du haut-parleur externe (2) à partir de l'entrée ; et
c. transmission de l'instruction sous la forme d'un signal de commande par l'intermédiaire de la deuxième interface de données (5) au haut-parleur externe (2).

15. Procédé selon la revendication 14, dans lequel l'instruction comprend un sélection d'émetteurs radio et/ou une sélection de données audio, dans lequel, après la transmission de l'instruction au haut-parleur externe (2), le haut-parleur externe (2) extrait, par l'intermédiaire de la troisième interface de données (6), de la deuxième source de données audio (7), un flux d'émetteurs radio correspondant à la sélection d'émetteurs radio ou des données audio correspondant à la sélection de données audio.

16. Procédé selon la revendication 14 ou 15, dans lequel la radio encastrée (1) transmet, après la mise à disposition de l'entrée, un signal de commande comprenant une instruction et le transmet par l'intermédiaire de la deuxième interface de données (5) au haut-parleur externe (2).

17. Procédé selon l'une des revendications 14 à 16, dans lequel la transmission de l'instruction par l'intermédiaire de la deuxième interface de données (5) comprend la transmission de l'instruction par l'intermédiaire d'un routeur (14), par exemple d'un routeur WLAN avec lequel le haut-parleur externe (2) et la radio encastrée (1) sont reliés pour la transmission d'instructions.
